# EUROPÄISCHE PATENTSCHRIFT

(11) **EP 1 995 427 B1**
(45) Veröffentlichungstag und Bekanntmachung des Hinweises auf die Patenterteilung: **25.12.2013**
(21) Anmeldenummer: 07075661.4
(22) Anmeldetag: 01.08.2007
(51) Int. Cl.: F02B 39/10, F01D 25/16, H02K 5/128, H02K 7/14, H02K 7/18, F02B 37/013, F04D 25/04, F04D 25/06

(54) **Verdichtersystem**
Compressor system
Système de compresseur

(30) Priorität: 24.05.2007 EP 07090100; 20.06.2007 EP 07075496
(43) Veröffentlichungstag der Anmeldung: 26.11.2008
(73) Patentinhaber: Lindenmaier GmbH, 88487 Baltringen (DE); SycoTec GmbH & Co. KG, 88299 Leutkirch im Allgäu (DE)
(72) Erfinder: Bischof, Thomas, 87758 Illerbeuren (DE); Maier, Sandra, 88410 Bad Wurzach (DE); Kämpfer, Oliver, 87700 Memmingen (DE); Gödeke, Holger, 88480 Achtstetten (DE); Löffler, Rudolf, 88545 Unteressendorf (DE); Heber, Ralf, 89155 Erbach-Ersingen (DE)
(74) Vertreter: Pfenning, Meinig & Partner GbR

(56) Entgegenhaltungen:
- EP-A- 0 990 798
- EP-A- 1 070 837
- EP-A1- 1 201 891
- EP-A1- 1 995 426
- EP-A1- 1 995 427
- EP-A1- 1 995 429
- EP-A2- 1 182 346
- WO-A-98/30790
- WO-A-2005/068803
- DE-A1-102005 010 921

## Beschreibung

Die Erfindung bezieht sich auf ein Verdichtersystem für Verbrennungskraftmotoren nach Patentanspruch 1 sowie auf ein Antriebssystem nach Patentanspruch 20, das ein solches Verdichtersystem enthält.

Verbrennungskraftmotoren mit Turboladern sind im Kraftfahrzeugsektor prinzipiell bekannt. Typischerweise wird ein Abgasstrom aus dem Verbrennungsmotor heraus genutzt, um ein Turbinenrad anzutreiben. Dieses Turbinenrad ist beispielsweise über eine Welle mit einem Verdichterrad gekoppelt, das eine Verdichtung von zugeführter Frischluft in dem Brennraum sicherstellt. Eine solche Vorverdichtung bzw. "Aufladung" führt zu einer erhöhten Motorleistung bzw. erhöhtem Drehmoment gegenüber herkömmlichen Verbrennungskraftmaschinen. Allerdings besteht bei derartig aufgeladenen Verbrennungskraftmaschinen das Problem des so genannten "Turbolochs", das insbesondere beim Anfahren und Beschleunigen aus niedrigen Drehzahlen des Fahrzeugs, also wenn die Verbrennungskraftmaschine rasch in Bereiche höherer Leistung beschleunigt werden soll, auftritt. Dies rührt daher, dass der erhöhte Luftmengenbedarf auf der Luftzuführseite nur mit einer Verzögerung bereitgestellt werden kann (unter anderem bedingt durch die Trägheit des Systems Turbinenrad-Verdichterrad).

Die WO 98/30790 A2 zeigt eine Turboladeranordnung, bei der ein Verdichterrad durch einen Elektromotor angetrieben wird. Der Elektromotor enthält einen Rotormagneten, der auf einer Welle befestigt ist, um den Rotormagneten herum ist der Stator angeordnet. Um den Stator herum ist eine Luftzufuhröffnung für ein Verdichterrad gezeigt. Ein Kühlluftstrom für den Elektromotor ist axial radial innerhalb des eigentlichen, außerhalb des Stators verlaufenden, Luftmassenstroms führbar.

Die EP 1070837 A2 zeigt eine Vorrichtung und ein Verfahren zur Leistungssteigerung einer mittels Abgasturboladers aufgeladenen Brennkraftmaschine. Hauptbauteile der dortigen Lösung sind ein zusätzlich zum Abgasturbolader vorgesehener Verdichter, ein Hochgeschwindigkeitselektromotor als Antrieb für dessen Verdichterrad, eine zweite Elektromaschine zur Energiebereitstellung für den Hochgeschwindigkeitselektromotor und Ladung der Batterie und eine Regeleinheit.

Die EP 1 995 426 A1 und EP 1 995 429 A1 betreffen Turbolader bzw. Elektromotore, allerdings keine Verdichtersysteme, die eine Primärverdichterstufe sowie einen zusätzlichen Zusatzverdichter gemäß Patentanspruch 1 aufweisen.

Es ist daher die Aufgabe der vorliegenden Erfindung, ein Verdichtersystem zur Verfügung zu stellen, das mit geringstmöglicher Verzögerung die genau richtige Menge Frischluft einem Verbrennungskraftmotor zuführt, und das darüber hinaus im Aufbau einfach und möglichst wenig störanfällig ist.

Diese Aufgabe wird durch den Gegenstand des unabhängigen Patentanspruchs 1 gelöst.

Das erfindungsgemäße Verdichtersystem für Verbrennungskraftmotor enthält einen Zusatzluftverdichter zur Verdichtung von dem Verbrennungskraftmotor zuzuführender Frischluft. Dieser Zusatzluftverdichter enthält einen Elektromotor und dieser Elektromotor wiederum einen Rotor und einen Stator mit einem dazwischen liegenden Rotorspalt. Der Rotorspalt zwischen Rotor und Stator stellt zur Vermeidung von Frischluftführung um den Stator herum und zur Vermeidung zusätzlicher Luftzufuhröffnungen die Einlassluftöffnung für das Verdichterrad des Zusatzluftverdichters dar.

Es ist nicht mehr notwendig, die Frischluft um den Stator des Elektromotors herumzuführen und hierdurch großbauende und strömungstechnisch unter Umständen ungünstige Luftführungen vorzusehen. Stattdessen wird die Frischluft durch die Einlassluftöffnung, welche innerhalb des Rotorspaltes (also zwischen Rotor und Stator) vorgesehen ist, geführt.

Vorteilhaft ist also, dass der Rotorspalt zwischen Rotor und Stator eine Einlassluftöffnung für das Verdichterrad enthält. Dies bedeutet wiederum, dass der Elektromotor den Luftzustrom kaum behindert und dass keine zusätzlichen Luftzuführöffnungen vorgesehen werden müssen, welche den Strömungswiderstand unnötig erhöhen würden. Es ist daher sogar möglich, dass die Einlassluftöffnung frei von Streben zwischen Rotor und Stator ist. Aufgrund des Wegfalls des "Gegenlagers" ist hier eine solche Verstrebung nicht notwendig.

Die Einlassöffnung kann, je nach Dimensionierung von Rotor bzw. Stator mit einer großen Querschnittsfläche versehen sein. Vorzugsweise ist der kleinste Innendurchmesser des Stators 1,5- bis 4mal, vorzugsweise 2- bis 3mal so groß ist wie der größte Außendurchmesser des Rotors. Die angegebenen Längen beziehen sich hierbei jeweils auf die größten Ausdehnungen bzw. kleinsten Ausdehnungen der beteiligten Elemente, allerdings lediglich im Bereich der elektrisch bzw. magnetisch wirksamen Elemente (also nur über die Länge des beispielsweise Rotormagneten, eine nachfolgende Verdickung (beispielsweise im Bereich des Verdichterrades) ist hier nicht maßgeblich.

Der Vorteil dieses "Zusatzluftverdichters" (add-onlader) liegt darin, dass eine Leistungserhöhung über den gesamten Druckbereich bzw. Drehzahlbereich eines Verbrennungskraftmotors bzw. eines Verbrennungskraftmotors, der bereits mit einem (mechanischen) Turbolader versehen ist, gegeben ist. Es ist hier also nicht nur beim Anfahren eines Kraftfahrzeugs zusätzlicher Druck vorhanden.

Der kostengünstige Zusatzluftverdichter bietet somit ein höheres Eigenschaftspotential als herkömmliche Aufladungen.

Sehr vorteilhaft an dem Zusatzluftverdichter ist die sehr kurze Reaktionszeit, die vor allem auf die geringe Rotationsträgheit des Systems zurückzuführen ist. Aufgrund der nicht zwingend hohen thermischen Belastung sind die drehbaren Teile mit geringer Masse und aus kostengünstigen Materialien (unter Umständen sogar unverstärkte Kunststoffe) herstellbar, so dass schnell hohe Drehzahlen und damit Druckerhöhungen erzielbar sind. Selbst wenn ein erfindungsgemäßes Verdichtersystem zusätzlich einen Turbolader enthält, können die Reaktionszeiten hier nochmals dadurch deutlich verbessert werden, dass zunächst einmal keine Anbindung an den mechanischen Turbolader ist (also nicht dessen Trägheit zum Tragen kommt) und außerdem der elektrische Zusatzverdichter direkt und unmittelbar mit einem elektronischen Gaspedal eines Kraftfahrzeugs gekoppelt werden kann, so dass dieser praktisch keine Reaktionsverzögerung zeigt.

Dies bedeutet eine erhebliche Kennfelderweiterung im Bereich niedriger Drehzahlen des Verbrennungskraftmotors.

Insbesondere bei Systemen, bei denen der Zusatzluftverdichter zusätzlich zu einem Turbolader vorgesehen ist, kann der Zusatzluftverdichter zeitlich sehr begrenzt eingesetzt werden, also beim Anfahren des Kraftfahrzeugs bzw. bei extremen Leistungsanforderungen (kick-down etc.).

Der Elektromotor dient dazu, bei einer (z.B. von einer Steuerelektronik festgestellten) höheren Frischluftanforderung eine zusätzliche Beschleunigung des Zusatzluftverdichters durch den Elektromotor bereitzustellen. Hierzu sind Elektromotoren günstig, da diese ohne merkliche Anfahrverzögerung mit hohem Drehmoment beschleunigt werden können.

Außerdem ist vorteilhaft, dass der Elektromotor im vorliegenden Fall nicht zwischen dem Turbinenrad und dem Verdichterrad eines herkömmlichen Turboladers angeordnet sein muss. Eine solche Anordnung würde zu thermischen Problemen führen und stellt auch eine starke konstruktive Abwandlung von herkömmlichen (rein mechanischen) Turboladern dar. Neben dem erhöhten konstruktiven Aufwand ist der Reparaturaufwand bei solchen Aufbauten erheblich. Aufgrund der geringen thermischen Belastung des Zusatzluftverdichters sind kostengünstige Kunststoffbauteile verwendbar.

Das erfindungsgemäße Antriebssystem enthält neben dem erfindungsgemäßen Verdichtersystem einen Verbrennungskraftmotor. Unter "Verbrennungskraftmotor" soll im Kontext der vorliegenden Erfindung jeglicher Motor verstanden werden, der sowohl Frischluft/Frischgas als auch Abgas benötigt bzw. produziert, so dass ein entsprechender Zusatzluftverdichter hier Anwendung finden könnte. Darüber hinaus enthält das Antriebssystem auch einen Speicher für elektrische Energie. Hier ist vorzugsweise der Elektromotor mit dem Speicher für elektrische Energie verbunden zur Entnahme elektrischer Energie.

Besonders vorteilhaft bei diesem Antriebssystem ist auch, wenn der Elektromotor des Zusatzluftverdichters bzw. der mit ihm verbundene elektrische Speicher zusätzlich mit einem elektromotorischen Antrieb eines Kraftfahrzeuges verbindbar ist. Dieser elektromotorische Antrieb kann beispielsweise ein Nabenelektromotor (oder ein anderer im Antriebsstrang vorgesehener Elektromotor) sein, der an einem Antriebsrad des Kraftfahrzeugs befestigt ist. In modernen, so genannten "Hybridfahrzeugen" wird auf diese Weise sowohl eine zusätzliche Bereitstellung von Drehmoment bzw. Motorleistung beim Beschleunigen erzielt, da neben dem Verbrennungskraftmotor auch die elektrischen Nabenmotoren für die Beschleunigung zuständig sind. Bei Bremsvorgängen kann durch das Umschalten der elektrischen Nabenmotoren in den Generatorbetrieb eine Bremswirkung und somit eine Rückgewinnung von kinetischer in elektrische Energie erreicht werden, die in einem entsprechenden Speicher zwischengespeichert wird. Ist nun auch der Elektromotor des Zusatzluftverdichters mit eben diesem Speicher verbunden, kann somit zentral die gesamte elektrische Energie "verwaltet" werden, um diese jederzeit nutzbringend abrufbar zu machen.

Daneben ist es selbstverständlich aber auch möglich, dass das Verdichtersystem und die elektrischen Nabenmotoren (bzw. andere Motore im Antriebsstrang) voneinander unabhängige elektrische Speicher haben.

Zur Steuerung der elektrischen Energie bzw. zur Bereitstellung optimalen Drehmoments bei niedrigem Verbrauch ist in dem Antriebssystem vorzugsweise eine Steuerelektronik vorzusehen zur Ermittlung der Rotordrehzahl des Zusatzluftverdichters Druckverhältnissen (z.B. eines Turboladers) sowie weiteren für den Verbrennungskraftmotor drehmomentrelevanten Werten vorzusehen.

Es ist vorgesehen, dass das Verdichtersystem einen mechanischen Turbolader oder einen anderen Luftverdichter mit einer Primärverdichterstufe aufweist und ein Frischluftzufuhrstrang zu der Primärverdichterstufe hin und ein Frischluftabfuhrstrang von der Primärverdichterstufe weg zum Verbrennungsmotor hin gegeben ist. Der erfindungsgemäße Zusatzluftverdichter kann hierbei entweder im Frischluftzufuhrstrang oder im Frischluftabfuhrstrang angeordnet sein, denkbar ist allerdings auch ein separater Strang zu dem Verbrennungsmotor hin.

Vorteilhafte Ausführungsformen des erfindungsgemäßen Zusatzluftverdichters werden in den folgenden vorteilhaften Weiterbildungen beschrieben.

In jedem Falle ist jedoch eine den Zusatzluftverdichter umgehende Bypassleitung vorsehbar, welche beim Normalbetrieb des Motors (beispielsweise im stationären mittleren Drehzahlbereich) den Zusatzluftverdichter abstellt und auf diese Weise das elektrische Bordnetz entlastet.

Alternativ ist auch eine Umleitung zum Überführen von Frischluft vom Frischluftzufuhrstrang in den Frischluftabfuhrstrang ohne Passieren der Primärverdichterstufe möglich, auf diese Weise kann auch der Hauptverdichter (Turbolader) bei Bedarf abgekoppelt werden.

Der Zusatzluftverdichter bietet sich also an als Zusatzteil eines mechanischen Turboladers oder in Ergänzung zu einem mechanischen Turbolader. Letzteres ist sowohl aus thermischen Gründen als auch zur Verbesserung des Eigenschaftsprofils als am günstigsten anzusehen.

Vorzugsweise enthält der Elektromotor einen Stator, der im Wesentlichen eine hohlzylindrische Form aufweist und der den Rotor konzentrisch umgibt. Hierbei ist vorteilhaft, dass der Stator als Teil der Innenwand eines Verdichtergehäuses ausgeführt werden kann. Der Stator kann beispielsweise auch als Einsatz in eine korrespondierende Öffnung des Verdichtergehäuses einsetzbar sein. Vorteilhaft an diesen Ausführungsformen ist, dass nur eine geringstmögliche konstruktive Änderung bekannter Luftverdichter (z.B. von herkömmlichen mechanischen Turboladern) nötig ist, so dass hierdurch insbesondere in der Großserie große Kosten- und Wettbewerbsvorteile realisierbar sind.

Der Rotor des Elektromotors weist vorzugsweise einen Rotormagneten auf, der von einer Armierung umgeben ist. Hierdurch wird der Rotormagnet mechanisch geschützt. Es kann außerdem auf diese Weise auf die Art des Magnetfeldes Einfluss genommen werden. Der Rotormagnet kann so ausgebildet sein, dass er partiell oder auch komplett in das Verdichterrad integriert ist. Besteht das Verdichterrad des Zusatzluftverdichters aus faserverstärktem oder unverstärktem Kunststoff, so kann der Rotormagnet bei der Produktion direkt mit der Kunststoffmasse umspritzt werden, wodurch eine kostengünstige Großserienfertigung ermöglicht wird.

Vorzugsweise ist die Armierung des Rotors "zylinderförmig" ausgeführt.

Fertigungstechnisch ist es vorteilhaft, dass der Rotormagnet innen bereichsweise hohl ist zum Aufstecken auf eine gemeinsame Welle mit dem Verdichterrad. Auf diese Weise ist eine kostengünstige Fertigung möglich.

Vorzugsweise kann das Verdichterrad des Zusatzluftverdichters aus einem nichtmetallischen Material, vorzugsweise einem verstärkten oder unverstärkten Kunststoff sein. Hierdurch wird das elektromagnetische Feld des Elektromotors praktisch nicht mehr beeinflusst.

Besonders vorteilhaft ist ein im ereich der Einlassöffnung des Zusatzluftverdichters frei auskragenden Ende jenseits des Verdichterrades. Hier ist der Rotor des Elektromotors angebracht. Es ist erfindungsgemäß nicht notwendig, hier eine weitere Lagerstelle anzubringen, um den Rotor somit beidseitig zu lagern. Eine solche Lagerstelle würde zum einen die elektrischen Eigenschaften des Elektromotors unter Umständen stören und u.U. eine statische Überbestimmung darstellen. Des Weiteren wird die Reibungsarbeit im System unnötig erhöht durch ein solches Lager. Außerdem ist auch die Frischluftzuführung durch ein solches Lager behindert, da entsprechende Streben die Einlassluftöffnung zum Verdichterrad hin verkleinern.

Zur Steigerung der energetischen Effizienz kann hierbei auch die Sollspannung des Elektromotors mehr als 12 V, beispielsweise 24 oder 48 V betragen.

Die Steuerung des Elektromotors des Zusatzluftverdichters ermöglicht die gezielte Regelung des Aufladevorgangs. Die für die Regelung wichtige Kenngröße Rotordrehzahl des Elektromotors kann mit Hilfe eines Hallsensors (der in den Motor integriert ist) oder über die Motorsteuerung erfasst werden. Somit lässt sich der Verbrennungsprozess des Kolbenmotors optimieren. Vorzugsweise erfolgt die Steuerung über das zentrale Motormanagement.

Weitere vorteilhafte Weiterbildungen werden in den übrigen abhängigen Ansprüchen angegeben.

Die vorliegende Erfindung wird nun anhand mehrerer Figuren erläutert. Es zeigen:
- Fig. 1: eine erste Ausführungsform eines erfindungsgemäßen Verdichtersystems;
- Fig. 2: eine zweite Ausführungsform eines erfindungsgemäßen Verdichtersystems;
- Fign. 2a und 2b: eine erste Ausführungsform eines erfindungsgemäßen Zusatzluftverdichters; und
- Fign. 3a und 3b: eine zweite Ausführungsform eines erfindungsgemäßen Zusatzluftverdichters.

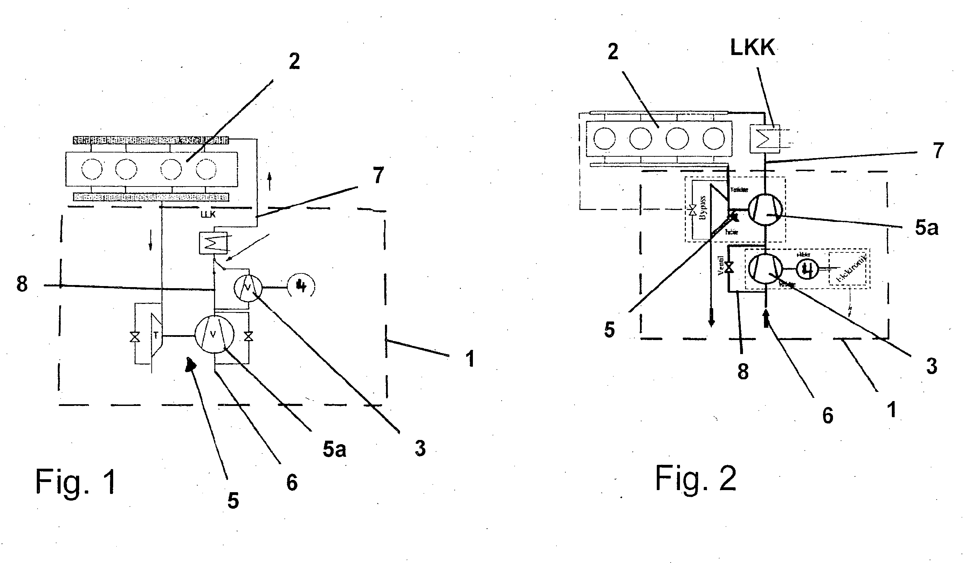

Fig. 1 zeigt eine erste Ausführungsform eines erfindungsgemäßen Verdichtersystems 1, das an einen Verbrennungskraftmotor 2 angeschlossen ist. Von dem Verbrennungskraftmotor ausströmendes heißes Gas wird einer Turbine zugeführt ("T"), diese treibt ein Verdichterrad über eine gemeinsame Welle an ("V"). Zu diesem Verdichterrad (auch primär Verdichterstufe 5a des mechanischen Turboladers 5 genannt) führt ein Frischluftzufuhrstrang 6. Ein Frischluftabfuhrstrang 7 führt dann von der Primärverdichterstufe 5a zu dem Lufteinlass des Verbrennungskraftmotors 2. Im Frischluftabfuhrstrang 7 ist ein Zusatzluftverdichter 3 vorgesehen. Dieser weist einen elektrischen Antrieb auf (Elektromotor 4). Über eine Bypassleitung 8 ist (in Kombination mit einem Umschalter) der Zusatzluftverdichter 3 vom Frischluftabfuhrstrang 7 abkoppelbar. Ebenfalls im Frischluftabfuhrstrang (dem Zusatzluftverdichter sowie der Primärverdichterstufe 5a nachgeordnet) ist ein Ladeluftkühler (LLK) angeordnet. Die Primärverdichterstufe 5a ist ebenfalls über eine Umleitung umgehbar.

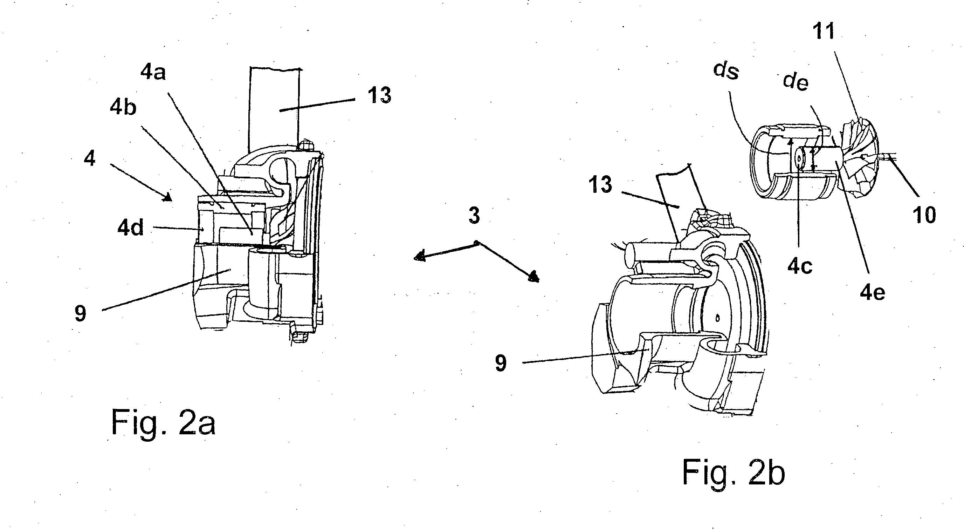

Fig. 2 zeigt eine weitere Ausführungsform eines erfindungsgemäßen Verdichtersystems 1, im Unterschied zum Modell nach Fig. 1a ist hier jedoch der Zuatzluftverdichter 3 im Frischluftzufuhrstrang 6 und nicht im Frischluftabfuhrstrang 7 angeordnet.

Fign. 2a und 2b zeigen einen elektrisch betriebenen Zusatzluftverdichter 3, der an einen Verbrennungskraftmotor ankoppelbar ist. Der Zusatzluftverdichter 3 hat ein Verdichtergehäuse 9. In diesem Verdichtergehäuse 9 ist ein Verdichterrad 11 angebracht, das durch eine Einlassluftöffnung 4d zugeführte Luft (diese Einlassluftöffnung ist insbesondere in Fig. 2a gut zu sehen) mittels des Verdichterrades 11 verdichtet und über einen radialen Luftausgang 13 zu dem Brennraum des Verbrennungskraftmotors 2 führt. Das Verdichterrad 3 zeigt in Fign. 2a und 2b linksseitig einen Fortsatz, an dem ein Rotor 4a eines Elektromotors gegeben ist. Der Rotor 4a ist zentral in der Einlassluftöffnung 4e angebracht.

Um den Rotor 4a herum ist ein Stator 4b vorgesehen, der im Wesentlichen eine hohlzylindrische Form aufweist und als Teil der Innenwand des Verdichtergehäuses im Bereich der Einlassluftöffnung dargestellt ist. Vorliegend ist der Stator 4b sogar als Einsatz in eine entsprechende Öffnung vorgesehen, so dass dieser sehr leicht montierbar ist. Vorliegend ist in Fig. 2a also der Rotorspalt zwischen Rotor 4a und Stator 4b die Einlassluftöffnung 4d für das Verdichterrad. Hierbei ist auch gemäß Fig. 2a die Einlassluftöffnung 4d frei von Streben zwischen Rotor und Stator. Der kleinste Innendurchmesser des Stators (siehe "ds" in Fig. 2b) 1,5 mal größer als der größte Außendurchmesser "de" des Rotors.

Der Rotor 4a des Elektromotors 4 weist einen Rotormagneten 4c auf, der von einer Armierung umgeben ist (siehe z.B. Fig. 2b). Hierbei ist die Armierung im Wesentlichen "becherförmig" ausgeführt, wobei der Boden des Bechers zum Verdichterrad hin fast vollständig geschlossen ist (abgesehen von einer zentrischen Montagebohrung).

Das Verdichterrad kann (muss aber nicht) aus einem nichtmetallischen Material sein. Bei einer Ausführung beispielsweise aus einem unverstärkten Kunststoff ist die Beeinflussung des elektromagnetischen Feldes des Elektromotors minimiert. Der Rotormagnet 4c wiederum ist bereichsweise hohl zum Aufstecken auf eine gemeinsame Welle mit dem Verdichterrad. Hier ist in Fig. 2b eine Bohrung des Rotormagneten entsprechend zu sehen. Die Welle 10 ist hierbei in der vorliegenden Ausführungsform so ausgeführt, dass Verdichterrad 11 sowie Rotor 4a fest (drehfest) miteinander verbunden sind.

Die Sollspannung des Elektromotors 4 in Fig. 2a beträgt vorliegend 12 V, es sind allerdings auch andere Spannungen (beispielsweise 48 V für Hybridfahrzeuge) möglich.

Das erfindungsgemäße Verdichtersystem findet Anwendung in einem erfindungsgemäßen Antriebssystem für Kraftfahrzeuge, das einen mit dem Zusatzluftverdichter verbundenen Verbrennungskraftmotor sowie einen Speicher für elektrische Energie enthält. Der Elektromotor 4 ist hierbei mit dem Speicher für elektrische Energie verbunden zur Entnahme elektrischer Energie in einem Motorbetrieb. In einer besonders bevorzugten Ausführungsform ist der Elektromotor mit einem elektrischen Speicher verbunden, der zusätzlich mit einem elektromotorischen Antrieb eines Kraftfahrzeugs verbindbar ist. Dies kann ein "Nabenmotor" eines Kraftfahrzeugs sein oder ein anderer Elektromotor, der im Antriebsstrang eines Kraftfahrzeugs (beispielsweise im Bereich des Getriebes) vorgesehen ist. Dieser Anschluss des Elektromotors an ein "Hybrid"-Fahrzeug ist besonders energieeffizient.

Zur effizienten Steuerung des Antriebssystems bzw. des Verdichtersystems ist eine Steuerelektronik zur Ermittlung der Drehzahl von Verdichterrad 11, Ist-Werten von Druckverhältnissen sowie weiteren für den Verbrennungskraftmotor drehmomentrelevanten Werten vorgesehen.

Die wichtigsten Komponenten der ersten Ausführungsform gemäß Fign. 2a und 2b sind in Fig. 2b, dort oben rechts als Teilexplosionszeichnung gezeigt. Hier ist zu sehen, dass es sich um einen Zusatzluftverdichter 3 handelt, der ein Verdichterrad 11 das mit einem Elektromotor 4 verbunden ist (bestehend aus Rotor 4a und Stator 4b). Der mit dem Verdichterrad 11 drehfest verbundene Rotor 4a des Elektromotors 4 ist zur Einlassluftöffnung 4e hin frei auskragend ausgeführt.

Dieses "freie Auskragen" ist vorteilhaft, da damit der konstruktive Aufwand vermindert wird und beispielsweise eine statische Überbestimmung der Gesamtlagerung vermieden wird. Unter "frei auskragend" sollen solche Anordnungen verstanden werden, bei denen der Rotor nicht gesondert und dauernd gelagert wird. Eventuell vorgesehene "Auffangkäfige" etc., die eine zu starke Biegung des frei kragenden Rotors, beispielsweise aufgrund von Biegeresonanzen verhindern sollen, gelten in diesem Sinne nicht als "Lager" Die Welle 10, die mit dem Verdichterrad 11 bzw. dem Rotor 4a fest verbunden ist, ist auf mindestens einem Lager, das als Kugellager oder Nadellager ausgeführt ist, gelagert.

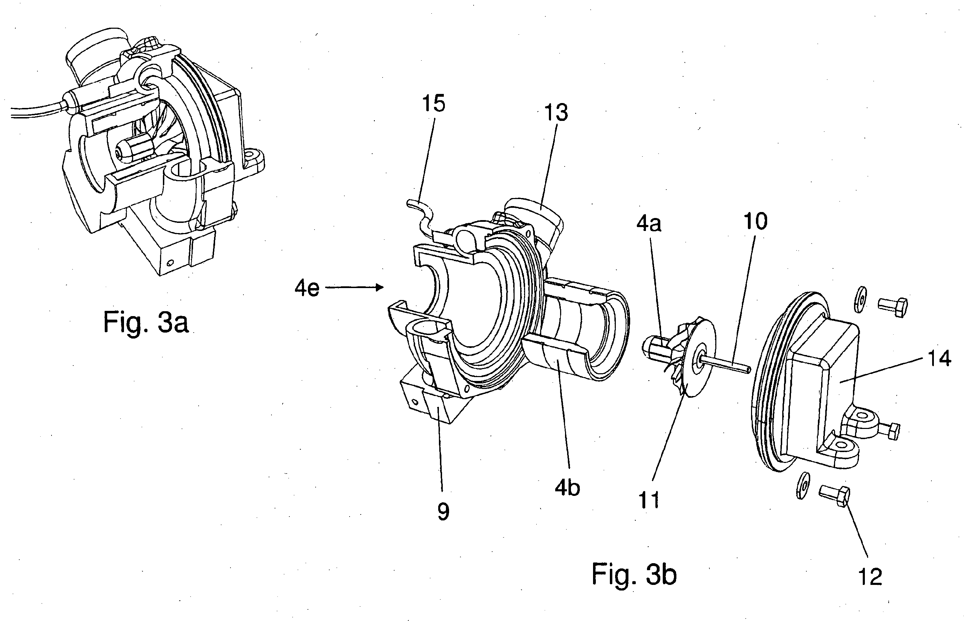

Eine zweite Ausführungsform ist in den Fign. 3a und 3b gezeigt. Hierbei ist der Rotormagnet 4 bei der Herstellung partiell in das Verdichterrad 11 integriert worden. Der Stator 4b bildet die Innenkontur des Verdichtergehäuses 9. Er verfügt über eine HallSonde mit deren Hilfe die Rotordrehzahl kontinuierlich ermittelt werden kann.

In Fig. 3b gut erkennbar ist der radiale Luftausgang 13 (dieser ist auch bei der ersten Ausführungsform nach Fign. 2a und 2b gegeben) sowie eine Stromzuführung 15.

Fig. 3b zeigt den Montageaufbau des Zusatzluftverdichters. Der Stator 4b wird auf der der Einlassluftöffnung 4e fortweisenden Seite in das Verdichtergehäuse 9 gesteckt. Anschließend wird der Rotor 4a zusammen mit dem Verdichterrad 11 (beide auf der Welle 10) eingesetzt. Die Welle 10 ist in einem Walzlager des zu dem Verdichtergehäuse gehörenden Rückwandteil 14 gelagert. Abschließend wird das Rückwandteil 14 mit dem übrigen Verdichtergehäuse mittels Schrauben 12 verbunden.

### Bezugszeichenliste

- 1: Verdichtersystem
- 2: Verbrennungskraftmotor
- 3: Zusatzluftverdichter
- 4: Elektromotor
- 4a: Rotor
- 4b: Stator
- 4c: Rotormagnet
- 4d: Einlassöffnung
- 4e: Armierung
- 5: mechanischer Turbolader
- 5a: Primärverdichterstufe
- 6: Frischluftzufuhrstrang
- 7: Frischluftabfuhrstrang
- 8: Bypassleitung
- 9: Verdichtergehäuse
- 10: Welle
- 11: Verdichterrad
- 12: Schrauben
- 13: radialer Luftausgang
- 14: Rückwandteil
- 15: Stromzuführung

## Patentansprüche

1. Verdichtersystem (1) für Verbrennungskraftmotoren (2), enthaltend einen Zusatzluftverdichter (3) zur Verdichtung von dem Verbrennungskraftmotor zuzuführender Frischluft, wobei dieser Zusatzluftverdichter einen Elektromotor (4) enthält und dieser Elektromotor einen Rotor (4a) und einen Stator (4b) mit einem dazwischen liegenden Rotorspalt aufweist, wobei das Verdichtersystem einen mechanischen Turbolader (5) oder einen anderen Luftverdichter mit einer Primärverdichterstufe (5a) aufweist und ein Frischluftzufuhrstrang (6) zu der Primärverdichterstufe hin und ein Frischluftabfuhrstrang (7) von der Primärverdichterstufe zum Verbrennungsmotor (2) hin gegeben ist, wobei der Zusatzluftverdichter (3) im Frischluftzufuhrstrang oder im Frischluftabfuhrstrang angeordnet ist, **dadurch gekennzeichnet, dass** der Rotorspalt zwischen Rotor (4a) und Stator (4b) die Einlassluftöffnung für das Verdichterrad (11) des Zusatzluftverdichters (3) ist.

2. Verdichtersystem nach Anspruch 1, **dadurch gekennzeichnet, dass** eine den Zusatzluftverdichter (3) umgehende Bypassleitung (8) vorgesehen ist.

3. Verdichtersystem nach einem der Ansprüche 1 oder 2, **dadurch gekennzeichnet, dass** die Bypassleitung (8) für den Zusatzluftverdichter (3) im Frischluftzufuhrstrang oder im Frischluftabfuhrstrang angeordnet ist.

4. Verdichtersystem nach einem der Ansprüche 1 bis 3, **dadurch gekennzeichnet, dass** eine Umleitung zum Überführen von Frischluft vom Frischluftzufuhrstrang (6) in den Frischluftabfuhrstrang (7) ohne Passieren der Primärverdichterstufe (5a) vorgesehen ist.

5. Verdichtersystem nach einem der vorhergehenden Ansprüche, **dadurch gekennzeichnet, dass** der Rotor (4a) axial gelagert ist und das Lager als ein oder mehrere Kugellager, Nadellager oder hydrodynamische Lager ausgeführt ist.

6. Verdichtersystem nach einem der vorhergehenden Ansprüche, **dadurch gekennzeichnet, dass** die Frischluftzufuhr zum Zusatzluftverdichter (3) axial angeordnet ist und die Frischluftabfuhr vom Zusatzluftverdichter fast radial zum Rotor angeordnet ist.

7. Verdichtersystem nach einem der vorhergehenden Ansprüche, **dadurch gekennzeichnet, dass** der Rotor (4b) im Bereich der Einlassluftöffnung (4D) des Zusatzluftverdichters (3) frei auskragend ausgeführt ist.

8. Verdichtersystem nach einem der vorhergehenden Ansprüche, **dadurch gekennzeichnet, dass** der Rotor (4a) des Elektromotors (4) einen Rotormagneten (4c) aufweist, der von einer Armierung (4E) umgeben ist.

9. Verdichtersystem nach einem der vorhergehenden Ansprüche, **dadurch gekennzeichnet, dass** der Stator (4b) im Wesentlichen eine hohlzylindrische Form aufweist.

10. Verdichtersystem nach Anspruch 9, **dadurch gekennzeichnet, dass** der Stator (4b) als Teil der Innenwand eines Verdichtergehäuses (6) des Zusatzluftverdichters (3) ausgeführt ist.

11. Verdichtersystem nach Anspruch 10, **dadurch gekennzeichnet, dass** der Stator (4b) als Einsatz in eine korrespondierende Öffnung des Verdichtergehäuses (9) einsetzbar ist.

12. Verdichtersystem nach einem der Ansprüche 9 bis 11, **dadurch gekennzeichnet, dass** der kleinste Innendurchmesser des Stators (4b) 1,5- bis 4mal, vorzugsweise 2- bis 3mal so groß ist wie der größte Außendurchmesser des Rotors (4a).

13. Verdichtersystem nach einem der Ansprüche 8 bis 12, **dadurch gekennzeichnet, dass** die Armierung (4E) des Rotors (4a) becherförmig ausgeführt ist.

14. Verdichtersystem nach einem der Ansprüche 8 bis 13, **dadurch gekennzeichnet, dass** der Rotormagnet (4c) innen bereichsweise hohl ist zum Aufstecken auf eine gemeinsame Welle (8) mit einem Verdichterrad des Zusatzluftverdichters.

15. Verdichtersystem nach einem der Ansprüche 5 bis 12, **dadurch gekennzeichnet, dass** der Rotormagnet partiell oder auch komplett in das Verdichterrad (11) des Zusatzluftverdichters integriert ist.

16. Verdichtersystem nach einem der vorhergehenden Ansprüche, **dadurch gekennzeichnet, dass** das Verdichterrad (11) des Zusatzluftverdichters (3)
aus einem nichtmetallischen Material ist, vorzugsweise aus einem verstärkten oder unverstärkten Kunststoff.

17. Verdichtersystem nach einem der vorhergehenden Ansprüche, **dadurch gekennzeichnet, dass** die Sollspannung des Elektromotors (4) 12, 24 oder 48 V beträgt.

18. Antriebssystem für Kraftfahrzeuge, enthaltend einen Verbrennungskraftmotor (2), einen Speicher für elektrische Energie sowie ein Verdichtersystem nach einem der vorhergehenden Ansprüche, **dadurch gekennzeichnet, dass** der Elektromotor (4) mit dem Speicher für elektrische Energie verbunden ist.

19. Antriebssystem nach Anspruch 18, **dadurch gekennzeichnet, dass** der mit dem Elektromotor (4) verbundene elektrische Speicher zusätzlich mit einem elektromotorischen Antrieb eines Kraftfahrzeuges verbindbar ist.

20. Antriebssystem nach einem der Ansprüche 18 oder 19, **dadurch gekennzeichnet, dass** dieses eine Steuerelektronik zur Ermittlung der Rotordrehzahl des Zusatzluftverdichters (3), Ist-Werten von Druckverhältnissen eines Turboladers und/oder weiteren für den Verbrennungskraftmotor drehmomentrelevanten Werten enthält.

## Claims

1. A compressor system (1) for internal combustion engines (2), containing an auxiliary air compressor (3) for compressing fresh air to be fed to the internal combustion engine, wherein this auxiliary air compressor contains an electric motor (4) and this electric motor comprises a rotor (4a) and a stator (4b) with a rotor gap arranged therebetween, wherein the compressor system comprises a mechanical turbocharger (5) or another air compressor with a primary compressor stage (5a), and a fresh air feed branch (6) to the primary compressor stage and a fresh air discharge branch (7) from the primary compressor stage to the internal combustion engine (2) is provided, wherein the auxiliary air compressor (3) is arranged in the fresh air feed branch or in the fresh air discharge branch, **characterised in that** the rotor gap between the rotor (4a) and stator (4b) is the inlet air opening for the compressor impeller (11) of the auxiliary air compressor (3).

2. The compressor system according to Claim 1, **characterised in that** a bypass line (8) bypassing the auxiliary air compressor (3) is provided.

3. The compressor system according to one of Claims 1 or 2, **characterised in that** the bypass line (8) for the auxiliary air compressor (3) is arranged in the fresh air feed branch or in the fresh air discharge branch.

4. The compressor system according to one of Claims 1 to 3, **characterised in that** a diversion for conveying fresh air from the fresh air feed branch (6) into the fresh air discharge branch (7) without passing the primary compressor stage (5a) is provided.

5. The compressor system according to one of the preceding claims, **characterised in that** the rotor (4a) is mounted axially and the bearing is formed as one or more ball bearings, needle bearings or hydrodynamic bearings.

6. The compressor system according to one of the preceding claims, **characterised in that** the fresh air feed is arranged axially with respect to the auxiliary air compressor (3) and the fresh air discharge from the auxiliary air compressor is arranged almost radially with respect to the rotor.

7. The compressor system according to one of the preceding claims, **characterised in that** the rotor (4b) in the region of the inlet air opening (4D) of the auxiliary air compressor (3) is formed in a freely projecting manner.

8. The compressor system according to one of the preceding claims, **characterised in that** the rotor (4a) of the electric motor (4) comprises a rotor magnet (4c) which is surrounded by an armouring (4E).

9. The compressor system according to one of the preceding claims, **characterised in that** the stator (4b) substantially has a hollow-cylindrical form.

10. The compressor system according to Claim 9, **characterised in that** the stator (4b) is formed as part of the inner wall of a compressor housing (6) of the auxiliary air compressor (3).

11. The compressor system according to Claim 10, **characterised in that** the stator (4b) can be inserted as an insert into a corresponding opening in the compressor housing (9).

12. The compressor system according to one of Claims 9 to 11, **characterised in that** the smallest inner diameter of the stator (4b) is 1.5 times to 4 times, preferably 2 times to 3 times, as large as the largest outer diameter of the rotor (4a).

13. The compressor system according to one of Claims 8 to 12, **characterised in that** the armouring (4E) of the rotor (4a) is cup-shaped.

14. The compressor system according to one of Claims 8 to 13, **characterised in that** the rotor magnet (4c) is hollow internally in regions for insertion onto a common shaft (8) with a compressor impeller of the auxiliary air compressor.

15. The compressor system according to one of Claims 5 to 12, **characterised in that** the rotor magnet is integrated partially or completely into the compressor impeller (11) of the auxiliary air compressor.

16. The compressor system according to one of the preceding claims, **characterised in that** the compressor impeller (11) of the auxiliary air compressor (3) is made of a non-metal material, preferably of a reinforced or non-reinforced plastic.

17. The compressor system according to one of the preceding claims, **characterised in that** the target voltage of the electric motor (4) is 12, 24 or 48 V.

18. A drive system for motor vehicles, containing an internal combustion engine (2), an accumulator for electrical energy, and a compressor system according to one of the preceding claims, **characterised in that** the electric motor (4) is connected to the accumulator for electrical energy.

19. The drive system according to Claim 18, **characterised in that** the electric accumulator connected to the electric motor (4) is additionally connectable to an electromotive drive of a motor vehicle.

20. The drive system according to one of Claims 18 or 19, **characterised in that** this contains a control electronics unit for establishing the rotor speed of the auxiliary air compressor (3), actual values of pressure conditions of a turbocharger and/or further torque-relevant values for the internal combustion engine.

## Revendications

1. Système de compresseur (1) pour moteurs à combustion interne (2), contenant un compresseur d'air auxiliaire (3) pour comprimer l'air frais destiné à alimenter le moteur à combustion interne, ce compresseur d'air auxiliaire contenant un moteur électrique (4) et ce moteur électrique comprenant un rotor (4a) et un stator (4b) avec un intervalle de rotor disposé entre les deux, le système de compresseur comprenant un turbocompresseur mécanique (5) ou un autre compresseur d'air doté d'un étage de compresseur principal (5a), et un circuit d'alimentation en air frais (6) vers l'étage de compresseur principal et un circuit d'évacuation d'air frais (7) depuis l'étage de compresseur principal vers le moteur à combustion interne (2) étant mis en place, le compresseur d'air auxiliaire (3) étant disposé dans le circuit d'alimentation en air frais ou dans le circuit d'évacuation d'air frais, **caractérisé en ce que** l'intervalle de rotor entre le rotor (4a) et le stator (4b) est l'orifice d'entrée d'air pour le rouet de compresseur (11) du compresseur d'air auxiliaire (3).

2. Système de compresseur conforme à la Revendication 1, **caractérisé en ce qu'**une ligne de dérivation (8) mettant le compresseur d'air auxiliaire (3) en dérivation est mise en place.

3. Système de compresseur conforme à l'une des Revendications 1 ou 2, **caractérisé en ce que** la ligne de dérivation (8) du compresseur d'air auxiliaire (3) est disposée dans le circuit d'alimentation en air frais ou dans le circuit d'évacuation d'air frais.

4. Système de compresseur conforme à l'une des Revendications 1 à 3, **caractérisé en ce qu'**une déviation destinée à transporter l'air frais depuis le circuit d'alimentation en air frais (6) vers le circuit d'évacuation d'air frais (7) sans passer dans l'étage de compresseur principal (5a) est mise en place.

5. Système de compresseur conforme à l'une des revendications précédentes, **caractérisé en ce que** le rotor (4a) est fixé de façon axiale et **en ce que** le palier est constitué d'un ou de plusieurs roulements à billes, roulements à aiguilles ou paliers hydrodynamiques.

6. Système de compresseur conforme à l'une des revendications précédentes, **caractérisé en ce que** l'alimentation en air frais est disposée de façon axiale par rapport au compresseur d'air auxiliaire (3) et **en ce que** l'évacuation d'air frais depuis le compresseur d'air auxiliaire est disposée de façon quasi-radiale par rapport au rotor.

7. Système de compresseur conforme à l'une des revendications précédentes, **caractérisé en ce que** le rotor (4b) situé dans la zone de l'orifice d'entrée d'air (4D) du compresseur d'air auxiliaire (3) est constitué de sorte à pouvoir se projeter librement.

8. Système de compresseur conforme à l'une des revendications précédentes, **caractérisé en ce que** le rotor (4a) du moteur électrique (4) comprend un aimant de rotor (4c) entouré d'une armature (4E).

9. Système de compresseur conforme à l'une des revendications précédentes, **caractérisé en ce que** le stator (4b) présente une forme substantiellement cylindrique et évidée.

10. Système de compresseur conforme à la Revendication 9, **caractérisé en ce que** le stator (4b) constitue une partie de la paroi interne d'un boîtier de compresseur (6) du compresseur d'air auxiliaire (3).

11. Système de compresseur conforme à la Revendication 10, **caractérisé en ce que** le stator (4b) peut être inséré sous forme d'un insert dans un orifice correspondant du boîtier de compresseur (9).

12. Système de compresseur conforme à l'une des Revendications 9 à 11, **caractérisé en ce que** le plus petit diamètre interne du stator (4b) est 1,5 fois à 4 fois, préférentiellement 2 fois à 3 fois, plus grand que le plus grand diamètre externe du rotor (4a).

13. Système de compresseur conforme à l'une des Revendications 8 à 12, **caractérisé en ce que** l'armature (4E) du rotor (4a) a la forme d'une coupole.

14. Système de compresseur conforme à l'une des Revendication 8 à 13, **caractérisé en ce que** l'aimant de rotor (4c) présente un intérieur évidé dans les zones destinées à l'insertion sur un axe commun (8) avec un rouet de compresseur du compresseur d'air auxiliaire.

15. Système de compresseur conforme à l'une des Revendications 5 à 12, **caractérisé en ce que** l'aimant de rotor est intégré partiellement ou entièrement dans le rouet de compresseur (11) du compresseur d'air auxiliaire.

16. Système de compresseur conforme à l'une des revendications précédentes, **caractérisé en ce que** le rouet de compresseur (11) du compresseur d'air auxiliaire (3) est fabriqué dans un matériau non métallique, préférentiellement dans un plastique renforcé ou non renforcé.

17. Système de compresseur conforme à l'une des revendications précédentes, **caractérisé en ce que** la tension cible du moteur électrique (4) est égale à 12, 24 ou 48 V.

18. Système de propulsion pour véhicules à moteur, contenant un moteur à combustion interne (2), un accumulateur d'énergie électrique et un système de compresseur conforme à l'une des revendications précédentes, **caractérisé en ce que** le moteur électrique (4) est connecté à l'accumulateur d'énergie électrique.

19. Système de propulsion conforme à la Revendication 18, **caractérisé en ce que** l'accumulateur électrique connecté au moteur électrique (4) peut de plus être connecté à une propulsion électromotrice d'un véhicule à moteur.

20. Système de propulsion conforme à l'une des Revendication 18 ou 19, caractérisé en ce celui-ci contient une unité électronique de pilotage permettant d'établir la vitesse du rotor du compresseur d'air auxiliaire (3), les valeurs réelles des conditions de pression d'un turbocompresseur et/ou des valeurs supplémentaires importantes en termes de couple pour le moteur à combustion interne.
